# EUROPEAN PATENT SPECIFICATION

(11) **EP 4 657 840 B1**
(45) Date of publication and mention of the grant of the patent: **25.11.2026**
(21) Application number: 25174375.3
(22) Date of filing: 06.05.2025
(51) Int. Cl.: H04N 1/00, G03G 15/00

(54) **PROCESSING APPARATUS AND DISPLAY CONTROL METHOD**
VERARBEITUNGSVORRICHTUNG UND ANZEIGESTEUERUNGSVERFAHREN
APPAREIL DE TRAITEMENT ET PROCÉDÉ DE COMMANDE D'AFFICHAGE

(30) Priority: 31.05.2024 JP 2024089324
(43) Date of publication of application: 03.12.2025
(73) Proprietor: Sharp Kabushiki Kaisha, Sakai City, Osaka 590-8522 (JP)
(72) Inventor: KAMIHISA, Sho, Sakai City, Osaka 590-8522 (JP)
(74) Representative: Müller Hoffmann & Partner

(56) References cited:
- US-A1- 2011 243 594
- US-A1- 2021 014 368

## Description

### BACKGROUND OF THE INVENTION

### Field of the Invention

The present disclosure relates to a processing apparatus and the like.

### Description of the Background Art

When starting up a processing apparatus such as a multifunction peripheral for the first time after installation, it is necessary to perform initial operations to operate, for example, an image forming unit, which is involved in image formation. Some processing apparatuses are designed to prompt an administrator to configure apparatus settings to use the apparatuses through an interactive process at the time of the first startup.

Patent document US2011243594 discloses an image forming apparatus e.g. copier, having a control part issuing restart signal between two different time points based on necessary time data and number of remaining setting screens on which settings are performed in wizard format.

An object of the present disclosure is to provide a processing apparatus and the like that makes it possible to reduce the time required before the processing apparatus is ready for use after installation.

### SUMMARY OF THE INVENTION

In order to achieve the object described above, a processing apparatus according to an aspect of the present disclosure includes: one or more controllers that control display of a screen; a display that displays the screen; and a device that requires initial operations for startup thereof. The controllers receive input for initial setup of the apparatus via the screen, process, in parallel, the reception of the input for the initial setup of the apparatus and the initial operations for the device, and control display of a completion screen that is displayed at an end of the initial setup of the apparatus depending on the progress of the initial operations.

A display control method according to another aspect of the present disclosure includes: displaying a screen; receiving input for initial setup of an apparatus via the screen; processing, in parallel, the reception of the input for the initial setup of the apparatus and initial operations for a device included in the apparatus; and controlling display of a completion screen that is displayed at an end of the initial setup of the apparatus depending on the progress of the initial operations.

According to the present disclosure, it is possible to provide a processing apparatus and the like that makes it possible to reduce the time required before the processing apparatus is ready for use after installation.

### BRIEF DESCRIPTION OF THE DRAWINGS

FIG. 1 is a diagram illustrating an overall configuration of a processing apparatus according to a first embodiment.
FIG. 2 is a diagram illustrating a functional configuration of the processing apparatus according to the first embodiment.
FIG. 3 is a sequence diagram for describing flows of processing according to the first embodiment.
FIG. 4 is a flowchart for describing a flow of processing according to the first embodiment.
FIG. 5 is a flowchart for describing a flow of processing according to the first embodiment.
FIG. 6 is a flowchart for describing a flow of processing according to the first embodiment.
FIG. 7 is a flowchart for describing a flow of processing according to the first embodiment.
FIGs. 8A to 8C are each a diagram for describing a device information table.
FIGs. 9A and 9B are each a diagram illustrating an operation example according to the first embodiment.
FIG. 10 is a diagram illustrating an operation example according to the first embodiment.
FIG. 11 is a diagram illustrating an operation example according to the first embodiment.
FIGs. 12A and 12B are each a diagram illustrating an operation example according to a second embodiment.
FIGs. 13A and 13B are each a diagram illustrating an operation example according to a third embodiment.
FIG. 14 is a diagram illustrating conventional art.

### DESCRIPTION OF THE PREFERRED EMBODIMENTS

The following describes embodiments of the present disclosure with reference to the accompanying drawings. It should be noted that the embodiments below are presented as examples for describing the present disclosure, and the technical scope of the description as recited in the appended claims is not limited by the following description.

Some processing apparatuses such as multifunction peripherals that include a device (referred to below as an image forming unit) having a unitized configuration including integrated or separate image formation-related process components (image carrier, charger, developing device, and the like) need to perform initial operations at the first startup after installation. Examples of initial operations include a detection operation and an (image quality) adjustment operation that are performed to ensure that such image forming units operate properly.

Other processing apparatuses execute, for example, a function (referred to below as an initial wizard) at the first startup or at post-apparatus initialization startup to prompt an administrator (user) to configure apparatus settings, such as language setting, region of use setting, user registration, and network setting of the apparatus, through interactive wizard screens. Typically, an initial wizard involves a restart of the apparatus to be performed after apparatus settings have been configured to apply the apparatus settings configured by the administrator.

In order to reduce the time required before the apparatus is ready for use, the initial wizard via wizard screens is allowed to be executed even while the initial operations for the image forming unit are being executed. However, if the initial wizard comes to an end, and then the apparatus is restarted before the initial operations for the image forming unit are completed, the initial operations for the image forming unit need to be performed again after the apparatus has been restarted. This results in an additional time required for the initial operations for the image forming unit, which means that it takes more time before the apparatus is ready for use.

Through the following embodiments, the present disclosure allows for implementation of a processing apparatus that makes it possible to reduce the time required before the processing apparatus is ready for use after installation.

### 1. First Embodiment

### 1.1. Functional Configuration

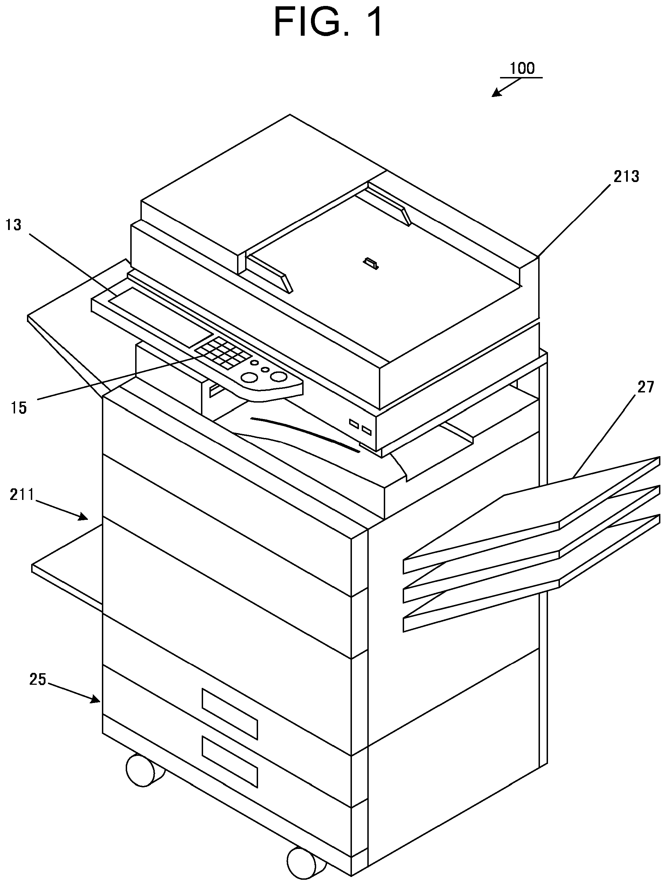

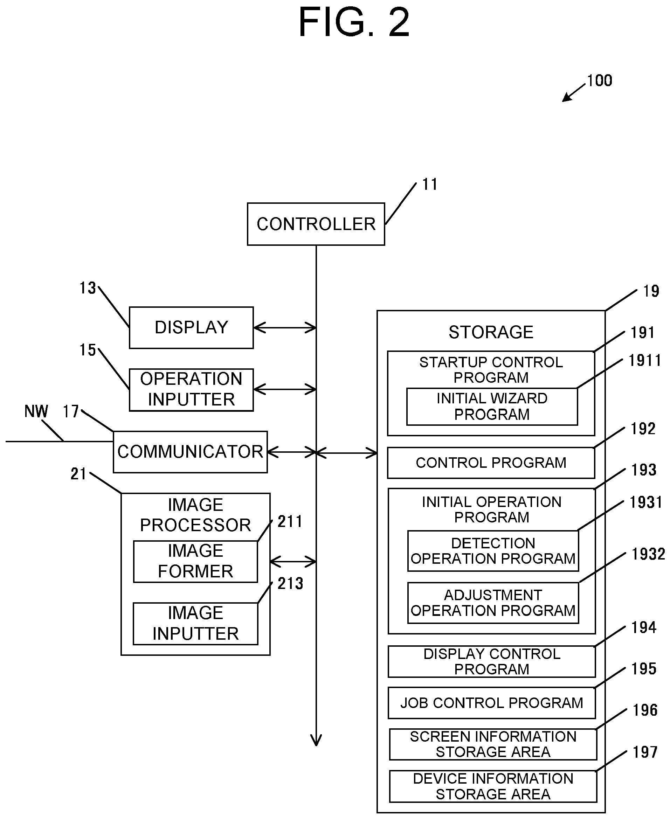

FIG. 1 is a diagram illustrating an overall configuration of a multifunction peripheral 100 (image forming apparatus), which is a processing apparatus according to a first embodiment. FIG. 2 is a diagram illustrating a functional configuration of the multifunction peripheral 100.

The multifunction peripheral 100 is a processing apparatus capable of executing various jobs such as print jobs, copy jobs, scan jobs, fax jobs, and image transmission jobs in a single housing. In the present disclosure, an example of a multifunction peripheral is described as a form of the processing apparatus. However, the processing apparatus is not limited to the multifunction peripheral, and may be, for example, a printer, a copier, or a fax machine where the types of job functions are limited.

The multifunction peripheral 100 includes a controller 11, a display 13, an operation inputter 15, a communicator 17, a storage 19, and an image processor 21.

The controller 11 performs overall control of the multifunction peripheral 100. The controller 11 may include, for example, one or more arithmetic devices (such as central processing units (CPUs) or Systems on Chip (SoCs)). The controller 11 reads and executes various programs stored in the storage 19, and thus implements functions thereof.

The display 13 is a display device that displays various types of information to a user, for example. The display 13 may include, for example, a liquid crystal display (LCD) or an organic electro-luminescence (EL) display. The display 13 displays, for example, wizard screens that are used in an initial wizard, as well as operation screens such as a home screen, not shown, and setting screens related to execution of various jobs.

The operation inputter 15 is an input device that receives input of information by, for example, the user. The operation inputter 15 may include, for example, operation keys, such as hardware keys or software keys, and various input devices, such as buttons. The operation inputter 15 can be configured as a touch panel that allows for input through the display 13. In a configuration in which the operation inputter 15 is a touch panel, the operation inputter 15 can detect the user's operation, such as a touch, tap, or swipe operation, on an object displayed via the display 13, and acquire information indicating coordinates, pressure sensing, and the like on the touch panel. In this configuration, the touch panel may adopt, for example, a common input method such as a resistive method, an infrared method, an inductive method, or a capacitive method.

The communicator 17 includes, for example, either or both of a wired interface and a wireless interface to communicate with an external device, not shown, via a network NW such as a local area network (LAN), a wide area network (WAN), the Internet, a telephone line, or a fax line. Furthermore, the communicator 17 may include, for example, an interface related to a short-range wireless communication technique such as Bluetooth (registered trademark), Near Field Communication (NFC), Wi-Fi (registered trademark), ZigBee (registered trademark), Infrared Data Association (IrDA), or wireless Universal Serial Bus (USB).

The storage 19 is one or more storage devices that store therein various programs necessary for operation of the multifunction peripheral 100 and various types of data. The storage 19 may include, for example, storage devices such as random access memory (RAM), a solid state drive (SSD), a hard disk drive (HDD), and read only memory (ROM).

In the first embodiment, the storage 19 stores therein a startup control program 191, a control program 192, an initial operation program 193, a display control program 194, and a job control program 195. In the storage 19, a screen information storage area 196 and a device information storage area 197 are reserved.

The controller 11 reads the startup control program 191 when starting up the multifunction peripheral 100. The controller 11 that has read the startup control program 191 controls startup processing for the multifunction peripheral 100. The startup control program 191 may be included in, for example, boot firmware or main firmware that is activated on the basis of verification using the boot firmware. In order to implement secure boot, the startup control program 191 may be stored in a storage device (storage area), not shown, other than the storage 19, or may be stored in an external device, not shown, on the network NW.

The startup control program 191 includes an initial wizard program 1911. The controller 11 reads the initial wizard program 1911 when starting up the multifunction peripheral 100. In particular, for example, the controller 11 reads the initial wizard program 1911 when initial setup of the multifunction peripheral 100 needs to be performed, such as when starting up the multifunction peripheral 100 for the first time after installation of the apparatus (first startup) or when starting up the multifunction peripheral 100 for the first time after initialization of the storage 19.

The controller 11 that has read the initial wizard program 1911 functions as, for example, an initial wizard that controls reception of input for apparatus settings via an interactive wizard screen (interaction screen) depending on a preset installation location (destination) of the multifunction peripheral 100. In the present disclosure, a screen capable of assisting the administrator (user) in configuring apparatus settings and receiving input of apparatus settings in a wizard function is referred to as a wizard screen. In the present disclosure, the controller 11 can process the initial wizard, which is implemented by reading the initial wizard program 1911, in parallel (simultaneously) with the initial operations for an image forming unit described below.

The controller 11 reads the control program 192 after starting up the apparatus based on the startup control program 191. The controller 11 that has read the control program 192 functions as an operating system (OS) and controls driving of hardware such as the display 13, the operation inputter 15, the communicator 17, and the image processor 21. The controller 11 controls driving of the multifunction peripheral 100 based on the apparatus settings received via the initial wizard.

The controller 11 reads the initial operation program 193 when performing initial operation processing for the image forming unit, which is included in an image former 211 described below. The initial operation program 193 includes at least a detection operation program 1931 and an adjustment operation program 1932.

The controller 11 that has read the detection operation program 1931, for example, determines whether the image forming unit mounted in the multifunction peripheral 100 is new or old, and determines whether or not the image forming unit mounted in the multifunction peripheral 100 is a genuine product. The controller 11 then detects the unit configuration of an image carrier (photoreceptor drum), a developing device, a toner, and the like forming the image forming unit, and performs preparatory operations such as warm-up to ensure normal operation of these components.

The controller 11 that has read the adjustment operation program 1932 performs an operation for adjusting the image quality of an image that is formed by the image forming unit, such as density adjustment of high density levels and density adjustment of midtone levels for the image forming unit that has completed the detection operation.

The controller 11 reads the display control program 194 when controlling output of an operation screen that is displayed on the display 13 or the operation inputter 15 configured as a touch panel. The controller 11 that has read the display control program 194 controls display of the wizard screen.

The controller 11 reads the job control program 195 when executing a print job related to printing, copying, or the like, or a job related to fax or image transmission. The controller 11 that has read the job control program 195 shifts to a job mode (print mode, copy mode, fax mode, image transmission mode, or the like) for executing a desired job, and executes the job. When executing a job, the controller 11 can display, on the touch panel, an operation screen for receiving the user's selection of setting values and functions necessary to execute the job, if necessary. The controller 11 can execute the job based on the settings and the functions received via the operation screen.

The screen information storage area 196 is reserved for storing screen information that forms wizard screens and operation screens for job execution. The controller 11 that has read the display control program 194 controls display of a wizard screen and an operation screen based on the screen information stored in the screen information storage area 196.

The device information storage area 197 is reserved for storing identification information of the image forming unit as a device, information related to the device configuration and the like, a flag (value) that indicates whether or not the initial wizard is executable, and a flag (value) for selecting and displaying a completion confirmation screen for the initial wizard.

The image processor 21 includes the image former 211 and an image inputter 213. The image former 211 feeds paper from a paper feeder 25, forms an image on the paper based on image data, and then discharges the paper to a paper discharger 27. The image former 211 may include, for example, an electrophotographic laser printer. In this case, the image former 211 may be configured as an image forming unit in which image formation-related process components such as an image carrier (photoreceptor drum), a developing device, a toner cartridge, and a cleaning device can be replaced as replaceable components. The image forming unit may be, for example, an integrated-type image forming unit in which all of the image carrier (photoreceptor drum), the developing device, and the toner cartridge are integrated, or may be a separate-type image forming unit in which some or all of the image carrier (photoreceptor drum), the developing device, and the toner cartridge are separated. The initial operations for the image forming unit, which are performed after the multifunction peripheral 100 has been installed, are also performed at the time of a replacement of the image forming unit, which occurs depending on the wear state (end of life) of the image forming unit.

The image inputter 213 generates image data by scanning a document. The image inputter 213 may be, for example, configured as a scanner device that includes an image sensor such as a charge coupled device (CCD) or a contact image sensor (CIS) and has an automatic document feeder (ADF), a flatbed, on which the document is placed and read, and the like. No particular limitations are placed on the configuration of the image inputter 213 as long as the image inputter 213 is configured to generate image data by reading a reflected light image from a document image using an image sensor. The image inputter 213 can be, for example, configured as an interface that allows for acquisition of image data stored in a storage medium such as a USB flash drive or image data sent from an external terminal device, not shown. It should be noted that the image processor 21 may be, for example, configured to generate image data for image transmission by applying shading correction or density correction to image data inputted from the image inputter 213.

### 1.2. Flow of Processing

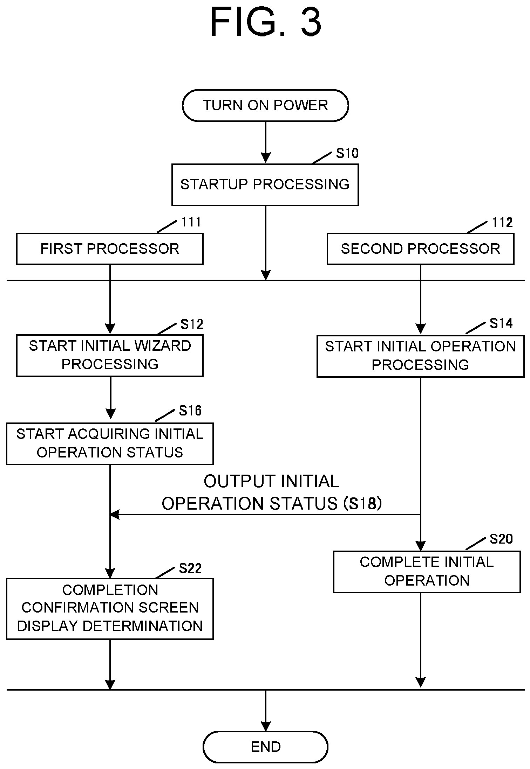

The following describes flows of processing according to the first embodiment. FIG. 3 is a sequence diagram for describing initial wizard processing and initial operation processing for the image forming unit that are performed in parallel by the controller 11. The controller 11 executes the processing to be described with reference to FIG. 3 by reading programs such as the startup control program 191 (initial wizard program 1911), the control program 192, the initial operation program 193, and the display control program 194. In this case, the controller 11 may include a single multitasking arithmetic device that performs the initial wizard processing and the initial operation processing in parallel, or a plurality of different arithmetic devices that respectively perform the initial wizard processing and the initial operation processing in parallel. For convenience of explanation, a functional configuration of the controller 11 that implements the function of performing the initial wizard processing is referred to as a first processor 111, and a functional configuration of the controller 11 that implements the function of performing the initial operation processing is referred to as a second processor 112.

When the multifunction peripheral 100 is installed at a predetermined installation location and the power thereof is turned on, the controller 11 starts the startup processing (S10). Upon starting the startup processing, the controller 11 functions as the first processor 111 by reading the initial wizard program 1911 and starts the initial wizard processing (S12).

In parallel (simultaneously) with the initial wizard processing that has been started, the controller 11 functions as the second processor 112 by reading the initial operation program 193 to start the initial operation processing for the image forming unit (S14).

Upon starting the initial wizard processing, the first processor 111 starts acquiring an initial operation status outputted from the second processor 112 (S16). Note here that the initial operation status is a status signal that indicates the operation (processing) state of the detection operation, the image quality adjustment, and the like for the image forming unit. The second processor 112 outputs the status signal to the first processor 111 while continuing the initial operations for the image forming unit (S18). Based on the initial operation status acquired from the second processor 112, the first processor 111 can determine the operation (processing) state of the initial operations in the image forming unit.

Upon completion of the initial operation processing for the image forming unit, the second processor 112 ends the series of processes (S20). Meanwhile, upon completion of the initial wizard processing, the first processor 111 determines whether or not to display a completion confirmation screen based on the initial operation status acquired from the second processor 112, and ends the series of processes (S22).

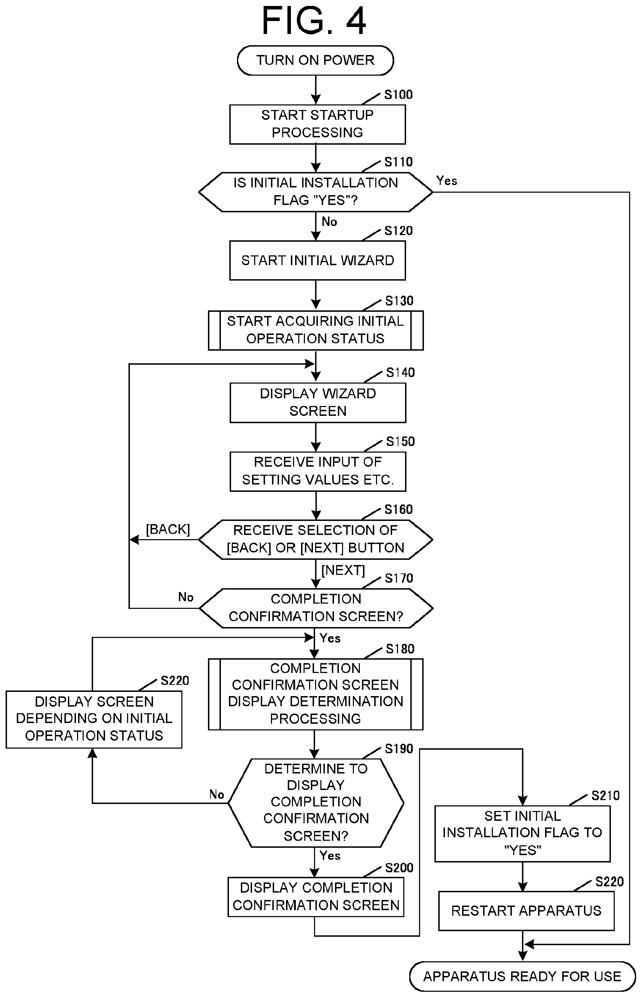

Next, an example of the initial wizard processing that is performed by the first processor 111 will be described using a flowchart shown in FIG. 4.

When the power of the multifunction peripheral 100 is turned on and the startup processing is started (Step S100), the first processor 111 determines whether or not an initial installation flag is "Yes" (Step S110). Note here that the initial installation flag refers to a flag indicating whether or not the initial wizard shown in the flowchart in FIG. 4 has already been executed after the installation of the multifunction peripheral 100. Upon determining that the value of the initial installation flag is "Yes", the first processor 111 omits processes in and after Step S120, and places the multifunction peripheral 100 in a ready-to-use state (Yes in Step S110-> "Apparatus ready for use").

Upon determining that the value of the initial installation flag is not "Yes", the first processor 111 starts the initial wizard (processing) (No in Step S110 --> Step S120).

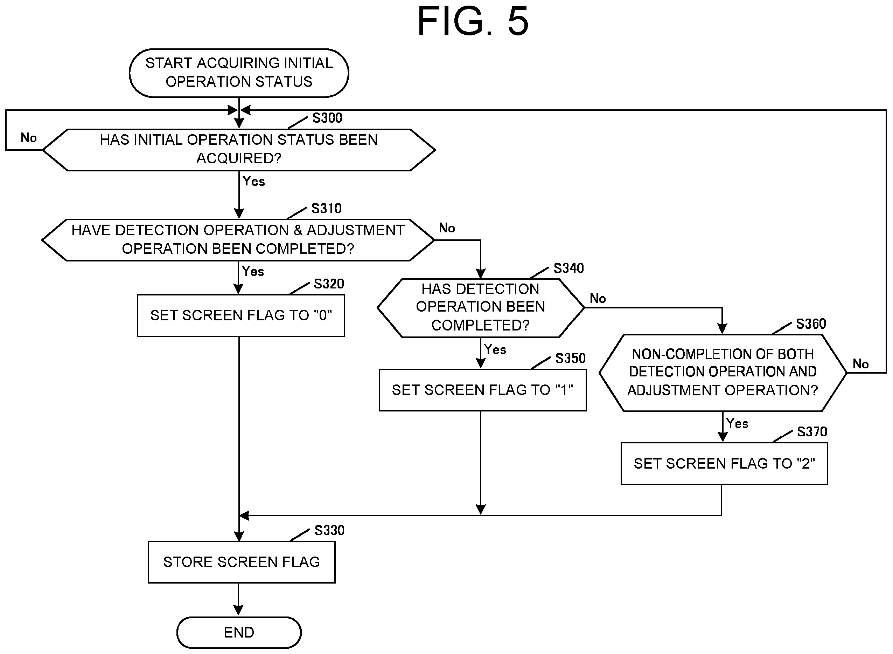

Upon starting the initial wizard processing, the first processor 111 executes initial operation status acquisition processing (Step S130). Details of the initial operation status acquisition processing will be described with reference to FIG. 5.

Next, the first processor 111 starts displaying a wizard screen (Step S140) and receives input of setting values and the like (Step S150).

Then, the first processor 111 determines whether a [Back] button or a [Next] button has been selected by the user (Step S160).

Upon determining that the [Back] button has been selected by the user, the first processor 111 transitions the screen to a wizard screen immediately preceding the currently displayed wizard screen and returns the processing to Step S140 ([Back] in Step S160 --> Step S140).

Upon determining that the [Next] button has been selected by the user, the first processor 111 transitions the screen to a wizard screen immediately following the currently displayed wizard screen. Then, the first processor 111 determines whether or not the wizard screen after the transition is a completion confirmation screen, which is a completion screen for the initial wizard processing (Step S170). Upon determining that the wizard screen after the transition is not the completion confirmation screen, the first processor 111 returns the processing to Step S140 (No in Step S170 --> Step S140).

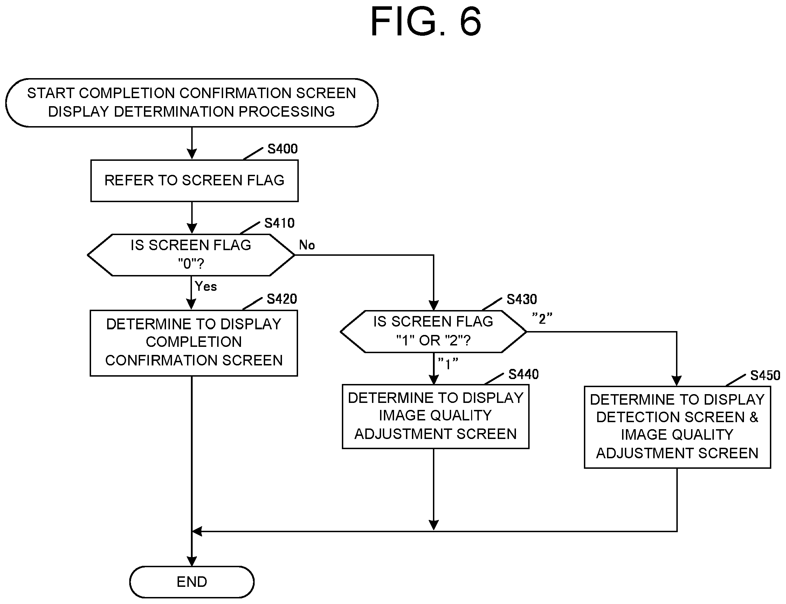

Upon determining that the wizard screen after the transition is the completion confirmation screen, the first processor 111 performs completion confirmation screen display determination processing (Yes in Step S170 --> Step S180). The completion confirmation screen display determination processing will be described with reference to FIG. 6.

Upon determining to display the completion confirmation screen as a result of the completion confirmation screen display determination processing, the first processor 111 displays the completion confirmation screen (Yes in Step S190 --> Step S200). Then, the first processor 111 sets the value of the initial installation flag to "Yes", restarts the apparatus, and places the multifunction peripheral 100 in a ready-to-use state (Step S210 --> Step S220 --> "Apparatus ready for use").

Upon determining in Step S190 not to display the completion confirmation screen, the first processor 111 displays a screen based on the value of a screen flag set depending on the acquired initial operation status and returns the processing to Step S180 (No in Step S190 --> Step S220 --> Step S180). Note here that the screen flag refers to a flag that is used by the first processor 111 to select a display screen to be displayed at the end of the initial wizard. In the present disclosure, a display screen such as a completion confirmation screen, an image quality adjustment screen, or a detection screen can be displayed depending on the screen flag set based on the initial operation status acquired from the second processor 112.

Next, the initial operation status acquisition processing that is performed by the first processor 111 will be described using a flowchart shown in FIG. 5. Upon starting the initial operation status acquisition processing, the first processor 111 determines whether or not the initial operation status has been acquired from the second processor 112 (Step S300). Upon determining that the initial operation status has been acquired from the second processor 112, the first processor 111 determines whether or not the acquired initial operation status results from completion of both the detection operation and the adjustment operation for the image forming unit (Yes in Step S300 --> Step S310). Upon determining that the initial operation status has not been acquired from the second processor 112, the first processor 111 waits until the initial operation status has been acquired (No in Step S300).

Upon determining that the acquired initial operation status results from completion of both the detection operation and the adjustment operation for the image forming unit, the first processor 111 sets the value of the screen flag to "0" (Yes in Step S310 --> Step S320). Then, the first processor 111 stores the screen flag in the device information storage area 197 and ends the processing (Step S330).

Upon determining that the acquired initial operation status does not result from completion of both the detection operation and the adjustment operation for the image forming unit, the first processor 111 determines whether or not the initial operation status results from completion of the detection operation for the image forming unit (No in Step S310 --> Step S340).

Upon determining that the acquired initial operation status results from completion of the detection operation for the image forming unit, the first processor 111 sets the value of the screen flag to "1" (Yes in Step S340 --> Step S350). Then, the first processor 111 stores the screen flag in the device information storage area 197 and ends the processing (Step S330).

Upon determining that the acquired initial operation status does not result from completion of the detection operation for the image forming unit, the first processor 111 determines whether or not the initial operation status results from non-completion of both the detection operation and the adjustment operation for the image forming unit (No in Step S340 --> Step S360).

Upon determining that the acquired initial operation status results from non-completion of both the detection operation and the adjustment operation for the image forming unit, the first processor 111 sets the value of the screen flag to "2" (Yes in Step S360 --> Step S370). Then, the first processor 111 stores the screen flag in the device information storage area 197 and ends the processing (Step S330).

Upon determining that the acquired initial operation status does not result from non-completion of both the detection operation and the adjustment operation for the image forming unit, the first processor 111 returns the processing to Step S300 (No in Step S360 --> Step S300).

Next, the completion confirmation screen display determination processing that is performed by the first processor 111 will be described using a flowchart shown in FIG. 6. Upon starting the completion confirmation screen display determination processing, the first processor 111 refers to the screen flag stored in the device information storage area 197 in Step S330 shown in FIG. 5 (Step S400).

The first processor 111 determines whether or not the value of the screen flag referred to is "0" (Step S410). Upon determining that the value of the screen flag referred to is "0", the first processor 111 determines to display the completion confirmation screen and ends the processing (Yes in Step S410 --> Step S420 --> "End").

Upon determining that the value of the screen flag is not "0", the first processor 111 determines whether the value of the screen flag referred to is "1" or "2" (No in Step S410 --> Step S430).

Upon determining that the value of the screen flag referred to is "1 ", the first processor 111 determines to display the image quality adjustment screen and ends the processing ("1" in Step S430 --> Step S440 --> "End"). Upon determining that the value of the screen flag referred to is "2", the first processor 111 determines to display the detection screen and the image quality adjustment screen, and ends the processing ("2" in Step S430 --> Step S450 --> "End").

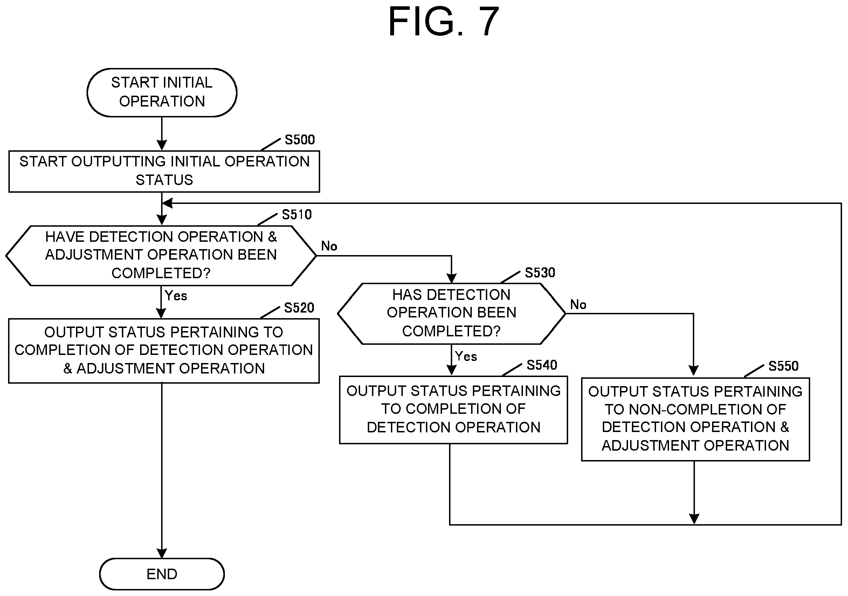

Next, initial operation status output processing that is performed by the second processor 112 will be described using a flowchart shown in FIG. 7. Upon starting the initial operation status output processing, the second processor 112 determines whether or not both the detection operation and the adjustment operation have been completed as initial operations for the image forming unit (Step S500 --> Step S510).

Upon determining that both the detection operation and the adjustment operation for the image forming unit have been completed, the second processor 112 outputs an initial operation status pertaining to completion of the detection operation and the adjustment operation to the first processor 111, and ends the processing (Yes in Step S510 --> Step S520--> "End").

Upon determining that not both the detection operation and the adjustment operation for the image forming unit have been completed, the second processor 112 determines whether or not the detection operation has been completed (No in Step S510 --> Step S530).

Upon determining that the detection operation for the image forming unit has been completed, the second processor 112 outputs an initial operation status pertaining to completion of the detection operation to the first processor 111, and returns the processing to Step S510 (Yes in Step S530 --> Step S540 --> Step S510).

Upon determining that the detection operation for the image forming unit has not been completed, the second processor 112 outputs an initial operation status pertaining to non-completion of both the detection operation and the adjustment operation to the first processor 111, and returns the processing to Step S510 (No in Step S530 --> Step S550 --> Step S510).

In the processing described using the flowchart shown in FIG. 7, the second processor 112 outputs, to the first processor 111, an initial operation status at the time when both the detection operation and the adjustment operation for the image forming unit have been completed, an initial operation status at the time when the detection operation for the image forming unit has been completed but the adjustment operation has not been completed, and an initial operation status at the time when both the detection operation and the adjustment operation for the image forming unit have not been completed.

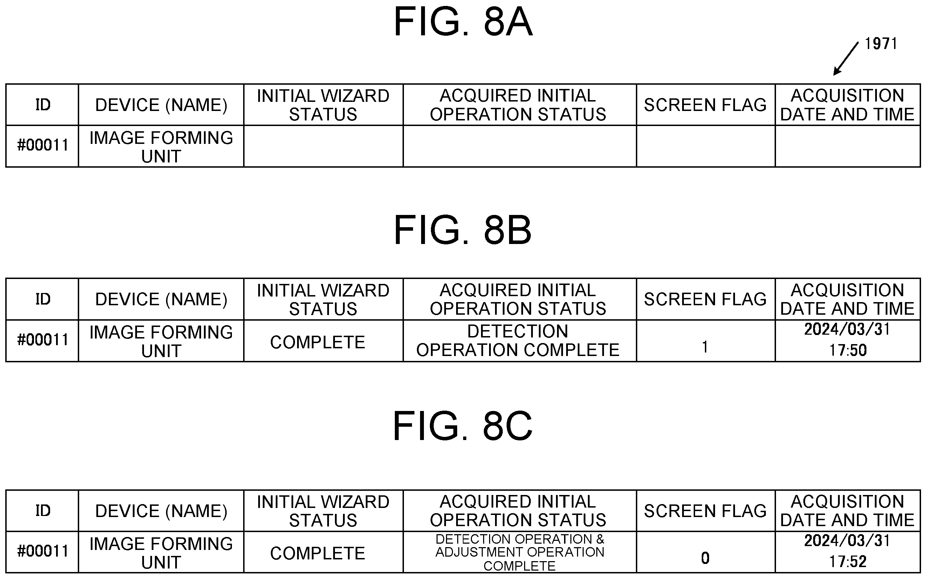

Referring now to FIGs. 8A to 8C, the following describes an example of a data configuration of a device information table 1971 that is managed in the device information storage area 197. The device information table 1971 illustrated in FIGs. 8A to 8C includes, as management items, "ID", "Device (name)", "Initial installation flag", "Acquired initial operation status", "Screen flag", and "Acquisition date and time".

"ID" is identification information (identifier) for uniquely identifying each device applied to the multifunction peripheral 100. "Device (name)" represents a device name of each device identified by an ID. "Initial wizard status" represents the progress of the initial wizard shown in the flowchart in FIG. 4. "Acquired initial operation status" represents a status signal indicating the operation state of the initial operations for the device (image forming unit) acquired from the second processor 112. "Screen flag" represents a flag that is set based on the acquired initial operation status and used to select a display screen to be displayed at the end of the initial wizard. "Acquisition date and time" represents the date and time of the acquisition of the initial operation status.

FIGs. 8A to 8C show an example of device information related to a device (device name: image forming unit) identified by an ID "#00011". FIGs. 8A to 8C show how the content of the table is updated depending on the progress of the initial operations for the device, i.e., the image forming unit.

FIG. 8A shows an example of the content of the table in a case where the initial wizard has not been executed after the installation of the multifunction peripheral 100. In the case of the example shown in FIG. 8A, neither the initial wizard processing nor the initial operation status acquisition processing has started, and accordingly the initial wizard status cell, the acquired initial operation status cell, the screen flag cell, and the acquisition date and time cell are blank.

FIG. 8B shows the content of the table in a case where the initial operation status acquired at the end of the initial wizard processing that has been started is an initial operation status pertaining to completion of the detection operation (detection operation complete). FIG. 8B shows an example in which "Detection operation complete" was acquired as the initial operation status at an acquisition date and time of "2024/03/31 17:50", and the value of the screen flag was set to "1" by the first processor 111 based on the acquired initial operation status.

FIG. 8C shows the content of the table in a case where the initial operation status acquired at the end of the initial wizard processing that has been started is an initial operation status pertaining to completion of both the detection operation and the adjustment operation (detection operation and (&) adjustment operation complete). FIG. 8C shows an example in which "Detection operation and (&) adjustment operation complete" was acquired as the initial operation status at an acquisition date and time of "2024/03/31 17:52", and the value of the screen flag was set to "0" by the first processor 111 based on the acquired initial operation status.

According to the first embodiment, as in the examples shown in FIGs. 8A to 8C, it is possible to determine a display screen to be displayed as a wizard screen depending on the initial operation status acquired at the end of the initial wizard processing. Furthermore, according to the first embodiment, restart of the apparatus is not executed until after the completion confirmation screen has been displayed in the initial wizard. Thus, it is possible to prevent unnecessary restart of the apparatus from being executed following completion of the initial wizard before the initial operations for the device (image forming unit) have been completed.

### 1.3. Operation Example

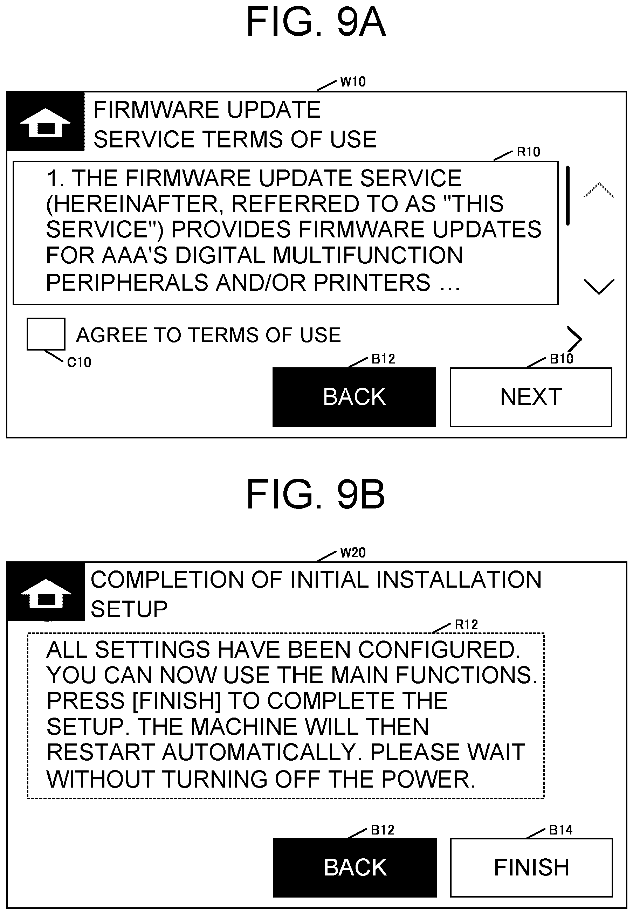

The following describes an operation example according to the first embodiment. FIGs. 9A and 9B are each a diagram illustrating an operation example in a case where the initial operation status acquired at the end of the initial wizard is an initial operation status pertaining to completion of both the detection operation and the adjustment operation.

FIG. 9A shows an example of a wizard screen that forms the initial wizard. Specifically, FIG. 9A shows an example of a display configuration of a wizard screen W10 related to firmware update service terms of use. The wizard screen W10 illustrated in FIG. 9A is an example of a wizard screen that immediately precedes a completion confirmation screen W20 illustrated in FIG. 9B and that is displayed to ask the user to agree to the firmware update service terms of use.

The wizard screen W10 illustrated in FIG. 9A includes a display area R10 for displaying the terms of use regarding the firmware update service, an agreement checkbox C10, a [Next] button B 10, and a [Back] button B12.

The display area R10 is provided to display the firmware update service terms of use to the user. The agreement checkbox C10 is provided to receive the user's agreement to the terms of use. The [Next] button B10 is provided to receive the user's instruction to select a screen transition to the next wizard screen (completion confirmation screen). The [Back] button B12 is provided to receive the user's instruction to select a screen transition to an immediately preceding wizard screen (not shown).

Upon receiving the user's instruction to select the [Next] button B10, the first processor 111 executes the processes in Step S160 to Step S190 shown in FIG. 4. If the initial operation status acquired at this point is an initial operation status pertaining to completion of the detection operation and the adjustment operation, the first processor 111 displays the completion confirmation screen illustrated in FIG. 9B.

The completion confirmation screen W20 illustrated in FIG. 9B includes a display area R12 for displaying a notification of completion of the initial wizard to the user, a [Finish] button B14, and the [Back] button B12.

For example, the display area R12 displays the following as a notification of completion of the initial wizard to the user: "All settings have been configured. You can now use the main functions. Press [Finish] to complete the setup. The machine will then restart automatically. Please wait without turning off the power."

The [Finish] button B 14 is provided to receive the user's instruction to complete the initial wizard. Upon receiving the user's instruction to select the [Finish] button B14, the first processor 111 ends the initial wizard and restarts the multifunction peripheral 100.

The [Back] button B12 is provided to receive the user's instruction to select a screen transition to an immediately preceding wizard screen, which is the wizard screen W10.

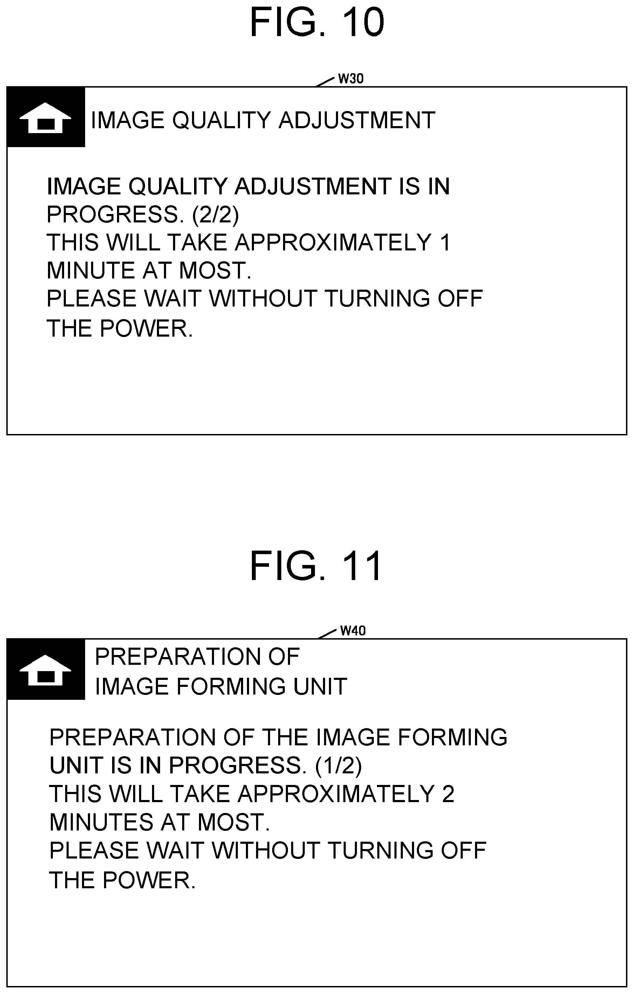

FIG. 10 is a diagram illustrating an operation example in a case where the initial operation status acquired at the end of the initial wizard is an initial operation status pertaining to completion of the detection operation. It should be noted that the following description uses FIGs. 9A and 9B or other drawings, provided that the same description of the wizard screen W10 or the completion confirmation screen W20 illustrated therein is applicable.

Upon receiving the user's instruction to select the [Next] button B 10 on the wizard screen W10 shown in FIG. 9A, the first processor 111 executes the processes in Step S160 to Step S190 shown in FIG. 4. If the initial operation status acquired at this point is an initial operation status pertaining to completion of the detection operation, the first processor 111 displays an image quality adjustment screen W30 illustrated in FIG. 10 as a first notification screen.

The image quality adjustment screen W30 may be configured as one of wizard screens for notifying the user that the image quality adjustment is ongoing as an initial operation for the image forming unit. On the image quality adjustment screen W30, a progress rate, which is the ratio of the number of operations that have been executed (detection operation) or are being executed (adjustment operation) to the number of all operations (detection operation and adjustment operation) required to start up the image forming unit, may be displayed in fraction form such as "2/2", for example. Furthermore, an estimated time (for example, approximately 1 minute at most) required before the operation being executed is completed may be displayed together with the progress rate, so that the user can know the progress of the initial operations for the image forming unit by checking the progress rate and the estimated time. As long as the progress rate and the estimated time are displayed on a wizard screen as in the image quality adjustment screen W30 illustrated in FIG. 10, for example, the user can come back to the multifunction peripheral 100 at an appropriate time, even if he or she has left the multifunction peripheral 100, for example.

If the initial operation status acquired as a result of re-executing the completion confirmation screen display determination processing after the image quality adjustment screen W30 has been displayed is an initial operation status pertaining to completion of the detection operation and the adjustment operation, the first processor 111 displays the completion confirmation screen W20 illustrated in FIG. 9B.

FIG. 11 is a diagram illustrating an operation example in a case where the initial operation status acquired at the end of the initial wizard is an initial operation status pertaining to non-completion of both the detection operation and the adjustment operation. It should be noted that the following description uses FIGs. 9A, 9B, and 10 or other drawings, provided that the same description of the wizard screen W10, the completion confirmation screen W20, or the image quality adjustment screen W30 illustrated therein is applicable.

Upon receiving the user's instruction to select the [Next] button B10 on the wizard screen W10 shown in FIG. 9A, the first processor 111 executes the processes in Step S160 to Step S190 shown in FIG. 4. If the initial operation status acquired at this point is an initial operation status pertaining to non-completion of both the detection operation and the adjustment operation, the first processor 111 displays a detection operation screen W40 illustrated in FIG. 11 as a second notification screen.

The detection operation screen W40 may be configured as one of wizard screens for notifying the user that the detection operation is ongoing as an initial operation for the device (image forming unit). On the detection operation screen W40, a progress rate, which is the ratio of the number of operations that have been executed or are being executed (detection operation) to the number of all operations (detection operation and adjustment operation) required to start up the device (image forming unit), may be displayed in fraction form such as "1/2", for example. Furthermore, an estimated time (for example, approximately 2 minutes at most) required before the operation being executed is completed may be displayed together with the progress rate, so that the user can know the progress of the initial operations for the device (image forming unit) by checking the progress rate and the estimated time.

If the initial operation status acquired as a result of re-executing the completion confirmation screen display determination processing after the detection operation screen W40 has been displayed is an initial operation status pertaining to completion of the detection operation, the first processor 111 displays the image quality adjustment screen W30 illustrated in FIG. 10. If the initial operation status acquired as a result of re-executing the completion confirmation screen display determination processing after the image quality adjustment screen W30 has been displayed is an initial operation status pertaining to completion of the detection operation and the adjustment operation, the first processor 111 displays the completion confirmation screen W20 illustrated in FIG. 9B. If the initial operation status acquired as a result of re-executing the completion confirmation screen display determination processing after the detection operation screen W40 has been displayed is an initial operation status pertaining to completion of the detection operation and the adjustment operation, the first processor 111 displays the completion confirmation screen W20 illustrated in FIG. 9B.

As described above, according to the first embodiment, it is possible to determine a display screen to be displayed as a wizard screen depending on the initial operation status acquired at the end of the initial wizard. Furthermore, according to the first embodiment, restart of the apparatus is not executed unless the user's instruction to complete the initial wizard is received after the completion confirmation screen has been displayed in the initial wizard. Thus, it is possible to prevent unnecessary restart of the apparatus from being executed following completion of the initial wizard before the initial operations for the device (image forming unit) have been completed.

### 2. Second Embodiment

A second embodiment is directed to an initial wizard that is applied in a certain region (for example, California, USA). For example, the second embodiment is directed to an initial wizard that is restricted (limited) to only one screen such as a change screen for changing an administrator password.

A functional configuration of a multifunction peripheral according to the second embodiment may be the same as the functional configuration of the multifunction peripheral 100 according to the first embodiment. Description thereof is therefore omitted herein.

Processing according to the second embodiment can be implemented by omitting the processes in Step S160 and Step S170 from the flowchart shown in FIG. 4.

### 2.1. Operation Example

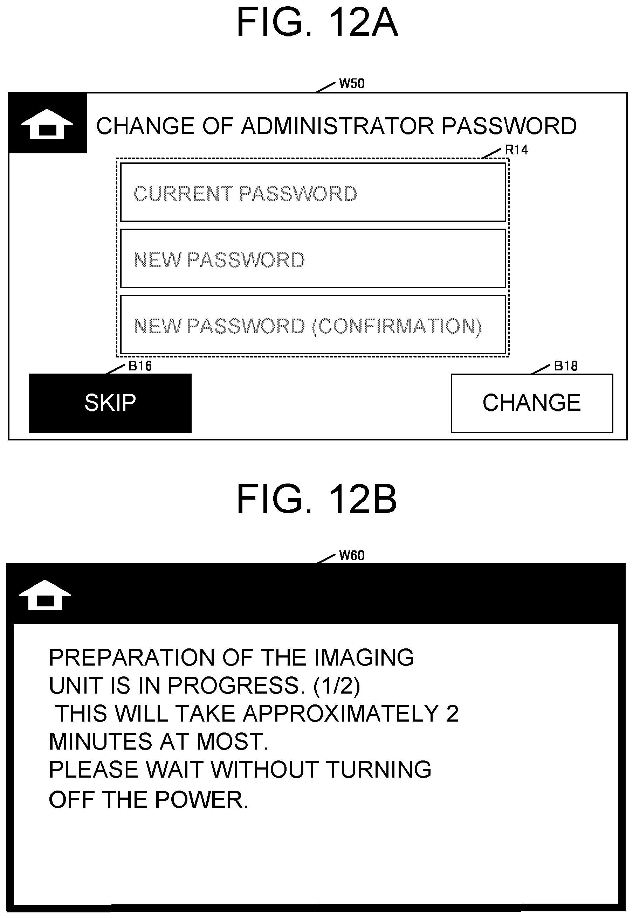

The following describes an operation example according to the second embodiment. FIG. 12A is a diagram illustrating an example of a display configuration of an administrator password change screen W50 according to the second embodiment. As mentioned above, in a certain region, the initial wizard is applied only to password setting for an administrator (user). In this case, it is possible to determine a display screen depending on the acquired initial operation status by treating the administrator password change screen W50 illustrated in FIG. 12A as the completion confirmation screen W20 according to the first embodiment. It should be noted that according to the second embodiment, the display screen based on the initial operation status is displayed as a dialog, since the initial wizard has only one screen, i.e., the administrator password change screen W50.

The change screen W50 includes a password input area R14 for receiving an instruction to set (change) an administrator password, a skip button B16, and a change button B18.

The password input area R14 includes a current password input box, a new password input box, and a new password (confirmation) input box, and receives password setting (change) by the administrator (user).

The skip button B16 is provided to receive an instruction to skip an administrator password change request. The change button B18 is provided to receive an instruction to confirm a password inputted and received via the password input area R14.

Upon either the skip button B16 or the change button B18 being selected by the user, the first processor 111 executes the completion confirmation screen display determination processing described with reference to Step S180 shown in FIG. 4.

FIG. 12B is a diagram illustrating an operation example in a case where the initial operation status acquired at the time of the selection of the skip button B 16 or the change button B18 is an initial operation status pertaining to non-completion of both the detection operation and the adjustment operation.

A detection operation dialog W60 illustrated in FIG. 12B may have the same configuration as the detection operation screen W40 according to the first embodiment. Description thereof is therefore omitted herein.

As described above, the second embodiment produces an effect of accommodating a processing apparatus destined for a certain region where the initial wizard is applied only to password setting for an administrator (user), in addition to the effect that is produced by the first embodiment.

### 3. Third Embodiment

A third embodiment is directed to initial operations at the time of a replacement of a device (image forming unit) due to the end of life of the device.

A functional configuration of a multifunction peripheral according to the third embodiment may be the same as the functional configuration of the multifunction peripheral 100 according to the first embodiment. Description thereof is therefore omitted herein.

Processing according to the third embodiment can be implemented by performing the processes in Step S180 to Step S220 in the flowchart shown in FIG. 4. The first processor 111 of the third embodiment only needs to control the display of a display screen based on the initial operation status as a dialog, which has been described in the second embodiment. Needless to say, it is also possible that the second processor 112 controls the display of a display screen based on the initial operation status as a dialog.

### 3.1. Operation Example

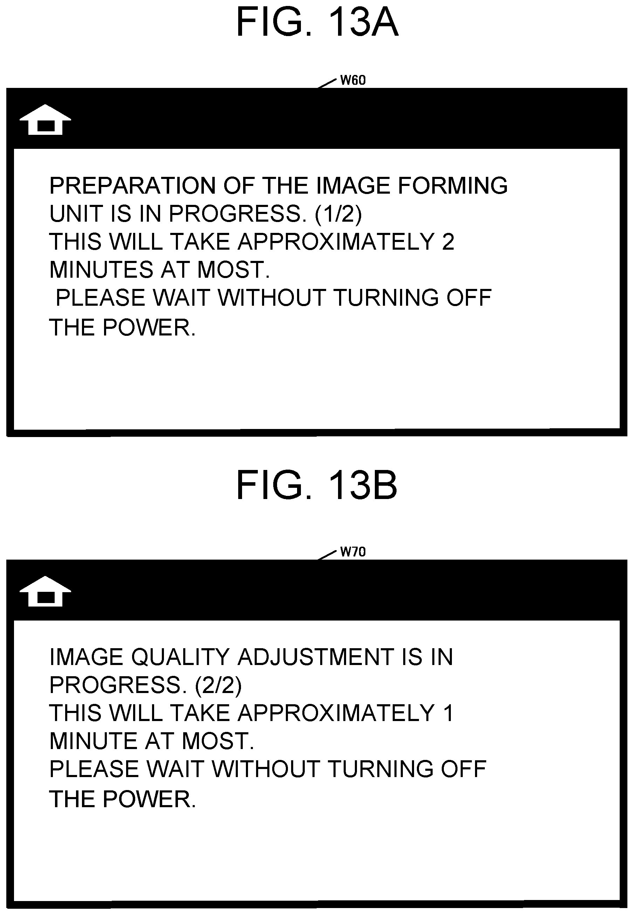

The following describes an operation example according to the third embodiment. The operation example according to the third embodiment may be the same as the operation example according to the second embodiment. FIG. 13A is a diagram illustrating an example of a display configuration of the detection operation dialog W60 in a case where the initial operation status acquired at the time of a replacement of the device (image forming unit) is an initial operation status pertaining to non-completion of both the detection operation and the adjustment operation. FIG. 13B shows an example of a display configuration of an image quality adjustment dialog W70 that is displayed after completion of the detection operation as a transition from the dialog shown in FIG. 13A.

The detection operation dialog W60 and the image quality adjustment dialog W70 may respectively display the same content as the detection operation screen W40 and the image quality adjustment screen W30 according to the first embodiment. Description thereof is therefore omitted herein.

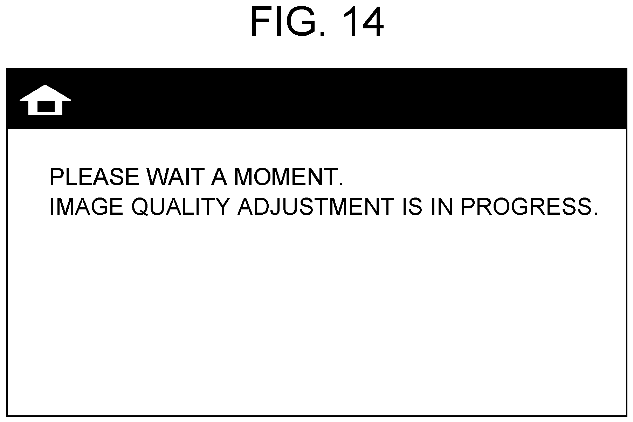

At the time of a replacement of a device (image forming unit) due to the end of life of the device according to conventional art, the progress of the initial operations for the device (image forming unit) and the like is not displayed as illustrated in FIG. 14. By contrast, according to the third embodiment, a progress rate, which is the ratio of the number of operations that have been executed or are being executed (detection operation) to the number of all operations (detection operation and adjustment operation) required to start up the device (image forming unit), may be displayed in fraction form such as "1/2" or "2/2", for example. Furthermore, an estimated time (for example, approximately 2 minutes at most) required before the operation being executed is completed may be displayed together with the progress rate. Thus, the user can know the progress of the initial operations for the device (image forming unit) by checking the progress rate and the estimated time.

As described above, the third embodiment produces an effect of accommodating the initial operations at the time of a replacement of a device (image forming unit) due to the end of life of the device, in addition to the effect that is produced by the first embodiment.

The present disclosure is not limited to the embodiments described above, and various modifications may be made thereto. That is, the technical scope of the present disclosure also includes embodiments that may be obtained by combining technical measures that are modified as appropriate without departing from the gist of the present disclosure.

Although some parts of the above-described embodiments are separately described for convenience of explanation, it is needless to say that the embodiments may be combined and implemented within a technically allowable range.

The program(s) that operates on each device (apparatus) in the foregoing embodiments is a program that controls the CPU or the like (program that causes a computer to function) so as to implement the functions according to the foregoing embodiments. Information that is handled by each device (apparatus) is temporarily accumulated in a temporary storage device (for example, RAM)) during processing, is then stored in various storage devices such as read only memory (ROM) and an HDD, and is read, corrected, and written by the CPU as needed.

A non-transitory computer-readable recording medium that records a program(s) in an information processing device as referred to herein may be, for example, any of a semiconductor medium (for example, ROM and a non-volatile memory card), an optical recording medium/magneto-optical recording medium (for example, Digital Versatile Disc (DVD)), a Magneto Optical Disc (MO), a Mini Disc (MD), a Compact Disc (CD), and a Blu-ray (registered trademark) Disc (BD)), and a magnetic recording medium (for example, a magnetic tape and a flexible disk). In this case, not only are the functions of the foregoing embodiments implemented through a computer of the image processing device reading and executing the program recorded on the recording medium, but the functions of the present disclosure may also be implemented through processing performed in cooperation with, for example, an operating system or other application programs based on instructions of the program.

For market distribution, the program may be stored and distributed in a portable recording medium or transferred to a server computer connected via a network such as the Internet. In this case, a storage device of the server computer is obviously included in the present disclosure.

Furthermore, the functional blocks or various features of the device/apparatus used in the embodiments described above may be implemented or executed as an electrical circuit, such an integrated circuit or a plurality of integrated circuits. An electrical circuit designed to implement the functions described herein may include a general-purpose processor, a digital signal processor (DSP), an application-specific integrated circuit (ASIC), a field programmable gate array (FPGA), or other programmable logic devices, discrete gates or transistor logic, discrete hardware components, or a combination of these. The general-purpose processor may be a microprocessor or a conventional processor, controller, microcontroller, or state machine. The electrical circuit described above may be configured by a digital circuit or an analog circuit. Moreover, when an integrated circuit technology that replaces the current integrated circuits emerges as a result of advances in semiconductor technology, one or more aspects of the present disclosure may also use the new integrated circuits based on such technology.

### REFERENCE SIGNS LIST

100 multifunction peripheral
11 controller
13 display
15 operation inputter
17 communicator
19 storage
191 startup control program
1911 initial wizard program
192 control program
193 initial operation program
1931 detection operation program
1932 adjustment operation program
194 display control program
195 job control program
196 screen information storage area
197 device information storage area
21 image processor
211 image former
213 image inputter

## Claims

1. A processing apparatus (100) comprising:
one or more controllers (11) that control display of a screen (W10-W70);
a display (13) that displays the screen (W10-W70); and
a device (211) that requires initial operations for startup thereof, wherein
the one or more controllers (11) receive input for initial setup of the apparatus (100) via the screen (W10-W70), process, in parallel, the reception of the input for the initial setup of the apparatus (100) and the initial operations for the device (211), and
**characterized in that** the one or more controllers are configured to:
control display of a completion screen (W20) that is displayed at an end of the initial setup of the apparatus (100) depending on the progress of the initial operations.

2. The processing apparatus (100) according to claim 1, wherein the one or more controllers (11) display the completion screen (W20) if the initial operations for the device (211) have been completed.

3. The processing apparatus (100) according to claim 1, wherein
the initial operations include a detection operation and an adjustment operation for the device (211), and
the one or more controllers (11)
display a first notification screen (W30) for notifying that the adjustment operation is ongoing before displaying the completion screen (W20), if the detection operation for the device (211) has been completed but the adjustment operation has not been completed, and
display a second notification screen (W40) for notifying that the detection operation is ongoing in addition to the first notification screen (W30) before displaying the completion screen (W20), if the detection operation and the adjustment operation for the device (211) have not been completed.

4. The processing apparatus (100) according to claim 3, wherein the one or more controllers (11) display the first notification screen (W30) or the second notification screen (W40) as one of screens (W10-W70) that are displayed in the initial setup of the apparatus (100).

5. The processing apparatus (100) according to claim 3, wherein the one or more controllers (11) display the progress of the adjustment operation on the first notification screen (W30) and display the progress of the detection operation on the second notification screen (W40).

6. The processing apparatus (100) according to claim 5, wherein the one or more controllers (11) display, as the progress, an estimated time required before the detection operation is completed.

7. The processing apparatus (100) according to claim 5, wherein the one or more controllers (11) display, as the progress, a progress rate, which is the ratio of the number of operations that have been executed or are being executed to the number of all operations required to start up the device (211).

8. The processing apparatus (100) according to claim 3, wherein
the device (211) is an image forming unit (211) including process components related to image formation,
the detection operation is an operation for detecting a replaceable component that is used in the image formation, and
the adjustment operation is an operation for adjusting an image quality of an image that is formed through the image formation.

9. The processing apparatus (100) according to claim 3, wherein the one or more controllers (11) display the first notification screen (W30) or the second notification screen (W40) as a dialog, if the number of screens (W10-W70) to be displayed in the initial setup of the apparatus (100) is limited.

10. A display control method comprising:
displaying a screen (W10-W70);
receiving input for initial setup of an apparatus (100) via the screen (W10-W70);
processing, in parallel, the reception of the input for the initial setup of the apparatus (100) and initial operations for a device (211) included in the apparatus (100); and
controlling display of a completion screen (W20) that is displayed at an end of the initial setup of the apparatus (100) depending on the progress of the initial operations.

## Patentansprüche

1. Verarbeitungsgerät (100), aufweisend:
einen oder mehrere Controller (11), die eine Anzeige eines Bildschirms (W10-W70) steuern;
eine Anzeige (13), die den Bildschirm (W10-70) anzeigt; und
eine Vorrichtung (211), die Anfangsoperationen zu deren Inbetriebnahme erfordert, wobei
der eine oder die mehreren Controller (11) eine Eingabe für eine Ersteinrichtung des Geräts (100) über den Bildschirm (W10-W70) empfangen,
den Empfang der Eingabe für die Ersteinrichtung des Geräts (100) und die Anfangsoperationen für die Vorrichtung (211) parallel verarbeiten und
**dadurch gekennzeichnet sind, dass** der eine oder die mehreren Controller so konfiguriert sind, dass sie:
eine Anzeige eines Abschlussbildschirms (W20), der am Ende der Ersteinrichtung des Geräts (100) angezeigt wird, in Abhängigkeit vom Fortschritt der Anfangsoperationen steuern.

2. Verarbeitungsgerät (100) nach Anspruch 1, wobei der eine oder die mehreren Controller (11) den Abschlussbildschirm (W20) anzeigen, falls die Anfangsoperationen für die Vorrichtung (211) abgeschlossen wurden.

3. Verarbeitungsgerät (100) nach Anspruch 1, wobei
die Anfangsoperationen eine Detektionsoperation und eine Einstellungsoperation für die Vorrichtung (211) umfassen und
der eine oder die mehreren Controller (11) einen ersten Mitteilungsbildschirm (W30) anzeigen, um mitzuteilen, dass die Einstellungsoperation im Gange ist, bevor der Abschlussbildschirm (W20) angezeigt wird, falls die Detektionsoperation für die Vorrichtung (211) abgeschlossen wurde, aber die Einstellungsoperation nicht abgeschlossen wurde, und
einen zweiten Mitteilungsbildschirm (W40) anzeigen, um mitzuteilen, dass die Detektionsoperation im Gange ist, zusätzlich zum ersten Mitteilungsbildschirm (W30), bevor der Abschlussbildschirm (W20) angezeigt wird, falls die Detektionsoperation und die Einstellungsoperation für die Vorrichtung (211) nicht abgeschlossen wurden.

4. Verarbeitungsgerät (100) nach Anspruch 3, wobei der eine oder die mehreren Controller (11) den ersten Mitteilungsbildschirm (W30) oder den zweiten Mitteilungsbildschirm (W40) als einen von Bildschirmen (W10-W70) anzeigen, die bei der Ersteinrichtung des Geräts (100) angezeigt werden.

5. Verarbeitungsgerät (100) nach Anspruch 3, wobei der eine oder die mehreren Controller (11) den Fortschritt der Einstellungsoperation auf dem ersten Mitteilungsbildschirm (W30) anzeigen und den Fortschritt der Detektionsoperation auf dem zweiten Mitteilungsbildschirm (W40) anzeigen.

6. Verarbeitungsgerät (100) nach Anspruch 5, wobei der eine oder die mehreren Controller (11) als den Fortschritt eine geschätzte Zeit anzeigen, die benötigt wird, bis die Operation abgeschlossen ist.

7. Verarbeitungsgerät (100) nach Anspruch 5, wobei der eine oder die mehreren Controller (11) als den Fortschritt eine Fortschrittsrate anzeigen, die das Verhältnis der Anzahl von Operationen, die ausgeführt worden sind oder gerade ausgeführt werden, zu der Anzahl aller Operationen ist, die erforderlich sind, um die Vorrichtung (211) in Betrieb zu nehmen.

8. Verarbeitungsgerät (100) nach Anspruch 3, wobei
es sich bei der Vorrichtung (211) um eine Bilderzeugungseinheit (211) handelt, die Prozesskomponenten in Bezug auf eine Bilderzeugung enthält,
es sich bei der Detektionsoperation um eine Operation zum Detektieren einer ersetzbaren Komponente handelt, die in der Bilderzeugung verwendet wird, und
es sich bei der Einstellungsoperation um eine Operation zum Einstellen einer Bildqualität eines Bildes handelt, das über die Bilderzeugung erzeugt wird.

9. Verarbeitungsgerät (100) nach Anspruch 3, wobei der eine oder die mehreren Controller (11) den ersten Mitteilungsbildschirm (W30) oder den zweiten Mitteilungsbildschirm (W40) als Dialog anzeigen, falls die Anzahl an Bildschirmen (W10-W70), die bei der Ersteinrichtung des Geräts (100) angezeigt werden sollen, begrenzt ist.

10. Anzeigesteuerungsverfahren, aufweisend:
Anzeigen eines Bildschirms (W10-W70);
Empfangen einer Eingabe für eine Ersteinrichtung eines Geräts (100) über den Bildschirm (W10-W70);
Parallelverarbeiten des Empfangs der Eingabe für die Ersteinrichtung des Geräts (100) und von Anfangsoperationen für eine im Gerät (100) enthaltene Vorrichtung (211); und
Steuern einer Anzeige eines Abschlussbildschirms (W20), der am Ende der Ersteinrichtung des Geräts (100) angezeigt wird, in Abhängigkeit vom Fortschritt der Anfangsoperationen.

## Revendications

1. Appareil de traitement (100) comprenant :
un ou plusieurs dispositifs de commande (11) qui commandent l'affichage d'un écran (W10-W70) ;
un dispositif d'affichage (13) qui affiche l'écran (W10-W70) ; et
un dispositif (211) qui nécessite des opérations initiales pour son démarrage, dans lequel
les un ou plusieurs dispositifs de commande (11) reçoivent une entrée pour la configuration initiale de l'appareil (100) par l'intermédiaire de l'écran (W10-W70),
traiter, en parallèle, la réception de l'entrée pour la configuration initiale de l'appareil (100) et les opérations initiales pour le dispositif (211), et
**caractérisé en ce que** les un ou plusieurs dispositifs de commande sont configurés pour :
commander l'affichage d'un écran d'achèvement (W20) qui est affiché à une fin de la configuration initiale de l'appareil (100) en fonction de l'avancement des opérations initiales.

2. Appareil de traitement (100) selon la revendication 1, dans lequel les un ou plusieurs dispositifs de commande (11) affichent l'écran d'achèvement (W20) si les opérations initiales pour le dispositif (211) ont été achevées.

3. Appareil de traitement (100) selon la revendication 1, dans lequel
les opérations initiales comportent une opération de détection et une opération de réglage pour le dispositif (211), et
les un ou plusieurs dispositifs de commande (11)
affichent un premier écran de notification (W30) pour notifier que l'opération de réglage est en cours avant d'afficher l'écran d'achèvement (W20), si l'opération de détection pour le dispositif (211) a été achevée mais que l'opération de réglage n'a pas été achevée, et
affichent un deuxième écran de notification (W40) pour notifier que l'opération de détection est en cours en plus du premier écran de notification (W30) avant d'afficher l'écran d'achèvement (W20), si l'opération de détection et l'opération de réglage pour le dispositif (211) n'ont pas été achevées.

4. Appareil de traitement (100) selon la revendication 3, dans lequel les un ou plusieurs dispositifs de commande (11) affichent le premier écran de notification (W30) ou le deuxième écran de notification (W40) comme l'un des écrans (W10-W70) qui sont affichés dans la configuration initiale de l'appareil (100).

5. Appareil de traitement (100) selon la revendication 3, dans lequel les un ou plusieurs dispositifs de commande (11) affichent l'avancement de l'opération de réglage sur le premier écran de notification (W30) et affichent l'avancement de l'opération de détection sur le deuxième écran de notification (W40).

6. Appareil de traitement (100) selon la revendication 5, dans lequel les un ou plusieurs dispositifs de commande (11) affichent, en tant qu'avancement, un temps estimé nécessaire avant que l'opération de détection ne soit achevée.

7. Appareil de traitement (100) selon la revendication 5, dans lequel les un ou plusieurs dispositifs de commande (11) affichent, en tant qu'avancement, un taux d'avancement, qui est le rapport du nombre d'opérations qui ont été exécutées ou sont en cours d'exécution par rapport au nombre de toutes les opérations nécessaires pour démarrer le dispositif (211).

8. Appareil de traitement (100) selon la revendication 3, dans lequel
le dispositif (211) est une unité de formation d'image (211) comportant des composants de processus liés à la formation d'image,
l'opération de détection est une opération pour détecter un composant remplaçable qui est utilisé dans la formation d'image, et
l'opération de réglage est une opération de réglage d'une qualité d'image d'une image qui est formée par le biais de la formation d'image.

9. Appareil de traitement (100) selon la revendication 3, dans lequel les un ou plusieurs dispositifs de commande (11) affichent le premier écran de notification (W30) ou le deuxième écran de notification (W40) sous forme de dialogue, si le nombre d'écrans (W10-W70) à afficher dans la configuration initiale de l'appareil (100) est limité.

10. Procédé de commande d'affichage comprenant :
l'affichage d'un écran (W10-W70) ;
la réception d'une entrée pour la configuration initiale d'un appareil (100) par l'intermédiaire de l'écran (W10-W70) ;
le traitement, en parallèle, de la réception de l'entrée pour la configuration initiale de l'appareil (100) et des opérations initiales pour un dispositif (211) inclus dans l'appareil (100) ; et
la commande de l'affichage d'un écran d'achèvement (W20) qui est affiché à une fin de la configuration initiale de l'appareil (100) en fonction de l'avancement des opérations initiales.
